# EUROPEAN PATENT APPLICATION

(11) **EP 1 605 642 A1**
(43) Date of publication of application: **14.12.2005**
(21) Application number: 04013495.9
(22) Date of filing: 08.06.2004
(51) Int. Cl.: H04L 12/56

(54) **Service dependent shared physical channel mapping**

(71) Applicant: MATSUSHITA ELECTRIC INDUSTRIAL CO., LTD., Kadoma-shi, Osaka 571-8501 (JP)
(72) Inventor: Wengerter, Christian, 63924 Kleinheubach (DE); Seidel, Eiko, 64285 Darmstadt (DE)
(74) Representative: Grünecker, Kinkeldey, Stockmair & Schwanhäusser Anwaltssozietät

(57) **Abstract**

A method is disclosed for use in wireless communication systems employing dynamic resource allocation schemes (Dynamic Channel Allocation, DCA) together with Link Adaptation (LA) schemes. The method allows to provide individually optimized Quality of Service to each of a plurality of services (303-308) running on one mobile station (301,302). This is achieved by exclusively mapping data belonging to one single service (303-308) to a Physical Data Block. Therefore, it is possible to adapt the transmission parameters of Physical Channels individually to the required Quality of Service of data transmitted over the channel. As a further advantage, the transmission capacity of the Physical Channel can be economically utilized.

## Description

This invention relates to wireless communication systems employing dynamic resource allocation schemes (Dynamic Channel Allocation, DCA) together with Link Adaptation (LA) schemes when services with different Quality of Service (QoS) requirements are supported.

In particular, this invention relates to methods for multiplexing user data in wireless communication systems with Dynamic Channel Allocation (DCA) and Link Adaptation (LA) techniques to the physical layer, to a method for adapting transmission parameters of the Physical Channel efficiently to the Quality of Service (QoS) requirements of the different services and applications a user is running.

The description will in the following concentrate on the downlink transmission, however, without loss of generality the same is valid for uplink transmission.

In wireless communication systems employing Dynamic Channel Allocation (DCA) schemes, air interface resources are assigned dynamically to different mobile stations. See for example R. van Nee, R. Prasad, "OFDM for Wireless Multimedia Communications", Artech House, ISBN 0-89006-530-6, 2000 and H. Rohling and R. Grunheid, "Performance of an OFDM-TDMA mobile communication system," in Proc. IEEE Vehicular Technology Conf. (VTC'96), Atlanta, GA, pp. 1589-1593, 1996. Air-interface resources are usually defined by Physical Channels (PHY channels). A Physical Channel corresponds to e.g. one or multiple bundled codes in a Code Division Multiple Access (CDMA) system, one or multiple bundled sub-carriers (sub-carrier blocks) in an Orthogonal Frequency Division Multiplex Access (OFDMA) system or to combinations of those in an Orthogonal Frequency Code Division Multiplex Access (OFCDMA) or an Multi Carrier-Code Division Multiple Access (MC-CDMA) system. In case of DCA, a PHY Channel is called shared Physical Channel.

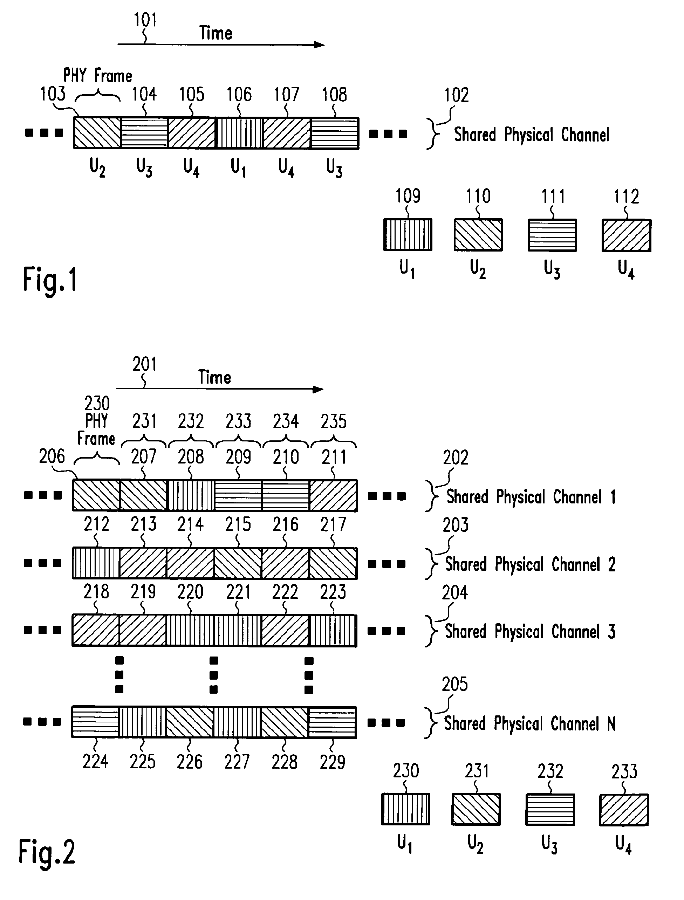

Figure 1 and figure 2 show DCA schemes for systems with a single and multiple shared Physical Channels respectively. A Physical Frame (PHY frame) reflects the time unit for which a so-called scheduler (PHY Scheduler) performs the DCA.

Figure 1 illustrates a structure where data for four mobile stations is transmitted over one shared Physical Channel 102. The time axis is represented by arrow 101. Boxes 103 to 108 represent PHY frames, wherein, as an illustrative example, frame 106 carries data for a first mobile station, frame 103 carries data for a second mobile station, frames 104 and 108 carry data for a third mobile station and frames 105 and 107 carry data for a fourth mobile station. In this example, a frequency or code division duplex system is shown, where one resource (i.e. frequency band or code) is continuously available for the depicted shared Physical Channel. In case of TDD, where an uplink PHY channel and a downlink PHY channel share one frequency or code, there would be gaps between the frames or within the frames of one channel corresponding to the duration of the transmission of a channel in the opposite direction. For this case, all description below would likewise be applicable as well.

Figure 2 illustrates the case where N shared Physical Channels 202 to 205 transmit data designated to four mobile stations. Arrow 201 represents the time axis. Columns 230 to 235 represent the time units of PHY frames for all channels. Boxes 206 to 229 represent data units defined by PHY channels and PHY frames. For example, data in boxes 206 to 211 is transmitted over PHY channel 1 and data in boxes 206, 212, 218 and 224 is transmitted during frame 230. In the given example, the data units 208, 212, 220, 221, 223, 225 and 227 carry data for a first mobile station, 206, 207, 215, 217, 226 and 228 carry data for a second mobile station, 209, 210, 224 and 229 carry data for a third mobile station and 211, 213, 214, 216, 218, 219 and 222 carry data for a fourth mobile station.

In order to utilize the benefits from DCA, it is usually combined with Link Adaptation (LA) techniques such as Adaptive Modulation and Coding (AMC) and Hybrid Automatic Repeat reQuest (HARQ).

In a wireless communication system employing Adaptive Modulation and Coding (AMC), the data-rate within a PHY Frame for a scheduled user will be adapted dynamically to the instantaneous channel quality of the respective link by changing the Modulation and Coding Scheme (MCS). This requires a channel quality estimate to be available at the transmitter for the link to the respective receiver. Detailed description of AMC is available in van Nee and Prasad cited above, Rohling and Grunheid cited above, as well as 3GPP, Technical Specification 25.308; High Speed Downlink Packet Access (HSDPA); Overall description; Stage 2, v. 5.3.0, December 2002, A. Burr, "Modulation and Coding for Wireless Communications", Pearson Education, Prentice Hall, ISBN 0-201-39857-5, 2001, L. Hanzo, W. Webb, T. Keller, "Single- and Multi-carrier Quadrature Amplitude Modulation", Wiley, ISBN 0-471-49239-6, 2000, A. Czylwik, "Adaptive OFDM for wideband radio channels," in Proc. IEEE Global Telecommunications Conf. (GLOBECOM'96), London, U.K., pp. 713-718, Nov. 1996 and C. Y. Wong, R. S. Cheng, K. B. Letaief, and R. D. Murch "Multiuser OFDM with Adaptive Subcarrier, Bit, and Power Allocation," IEEE J. Select. Areas Commun., vol. 17, no. 10, Oct. 1999.

For a given channel quality, different selected MCS levels corresponding to different data rates result in different PHY Frame error rates. Systems are typically operated at PHY Frame error rates (after the first transmission) between 1 % and 30 %. The so-called MCS "aggressiveness" is a common term to specify this MCS property. The MCS selection is considered to be "aggressive" if the target PHY Frame error rate (after the first transmission) is high, i.e. for a given channel estimation a high MCS level is chosen. This "aggressive "MCS selection behaviour can be useful when e.g. the transmitter assumes that the channel estimation is inaccurate or when a high packet loss rate is tolerable.

Due to the PHY Frame error rates caused by the selection of the MCS level (e.g. by incorrect channel quality estimation or inherent to the selected MCS level for a given channel quality), Hybrid Automatic Repeat reQuest (HARQ) schemes are used to control the data or packet loss rate (i.e. residual PHY Frame error rate after re-transmissions) delivered to the next layer or to the service/application. If a data block is received with uncorrectable errors, the data receiver transmits a NACK ("Not ACKnowledge") signal back to the transmitter, which in turn, re-transmits the data block or transmits additional redundant data for it. If a data block contains no errors or only correctable errors, the data receiver responds with an ACK ("ACKnowledge") message. Details are explained in Rohling and Grunheid cited above as well as S. Kallel, "Analysis of a type II hybrid ARQ scheme with code combining," IEEE Transactions on Communications, Vol.38, No. 8, August 1990, S. Lin, D.J. Costello Jr., "Error Control Coding: Fundamentals and Applications", Prentice-Hall, 1983 and S. Lin, D.J. Costello, M.J. Miller, "Automatic-repeat-request error-control schemes," IEEE Commun. Mag., vol. 22, no. 12, pp. 5-17, December 1984. As explained in the following, this residual PHY error rate depends as well on the AMC operation as on the HARQ operation.

As mentioned above, the AMC operation influences the residual PHY error rate by its so-called "aggressiveness". For a given HARQ setting an "aggressive" MCS selection will result in an increased residual PHY error rate, but yields the potential of improved throughput performance. A "conservative" MCS selection will result in a reduced residual PHY error rate.

The HARQ operation influences the residual PHY error rate by the number of maximum HARQ retransmissions and the employed HARQ scheme. Examples of well-known HARQ schemes are Chase Combining and Incremental Redundancy. The HARQ scheme specifies the method employed for the re-transmission of data packets, which are received with uncorrectable errors. With Chase Combining, for example, the packet in question is re-transmitted unchanged, and the received data is combined with data from previous transmissions to improve the signal to noise ratio. With incremental redundancy, each re-transmission contains additional redundant data to allow improved error correction. For a given number of maximum retransmissions an Incremental Redundancy scheme will decrease the residual PHY error rate and the delay compared to e.g. Chase Combining, at the expense of higher complexity. Moreover, for a given MCS "aggressiveness" an increase of the number of maximum HARQ retransmissions decreases the residual PHY Frame error-rate, but also increases the delay.

In a system, which makes use of DCA, AMC and HARQ, a so-called PHY scheduler decides which resources are assigned to which mobile station. A commonly used approach is to use centralized scheduling, where the scheduler is located in the base station and performs its decision based on the channel quality information of the links to the mobile stations, and according to the traffic occurring on those links, e.g. amount of data to be transmitted to a specific mobile station.
Common objectives of the PHY scheduler are to achieve fairness between users and/or to maximize system throughput.

In state-of-the-art wireless communication systems the PHY scheduler works on a packet basis, i.e. the data arriving from higher layers is treated packet-by-packet at the scheduler. Those packets may then be segmented or/and concatenated in order to fit them into a PHY Frame with the selected MCS level.

The following schedulers are well known in the area of wireless communications:

### Round Robin (RR) Scheduler:

This scheduler allocates equal air-interface resources to all users independent of the channel conditions thus achieving fair sharing of resources between users.

### Max-Rate (MR) or Max C/I (MC) Scheduler:

This scheduler chooses the user with the highest possible instantaneous data-rate (carrier-to-interference C/I ratio). It achieves the maximum system throughout but ignores the fairness between users.

Proportional Fair (PF) Scheduler (see e.g. J.M. Holzman, "Asymptotic analysis of proportional fair algorithm, " Proc. IEEE PIMRC 2001, San Diego, CA, pp. F-33- F-37, Oct. 2001):
This scheduler maintains an average data-rate transmitted to each user within a defined time window and examines the ratio of the instantaneous to the average channel conditions (or ratio of the instantaneous possible data-rate to the average data-rate) experienced by different users and chooses the user with the maximum ratio. This scheduler increases the system throughput with respect to RR scheduling, while maintaining long-term fairness between users.

In state-of-the-art wireless communication systems there are provisions to run several services belonging to one mobile station at a time. Typically, those services have different QoS requirements as e.g. shown in Table 1.

**Table 1.**

| Typical applications/services and respective QoS requirements. | | | |
|---|---|---|---|
| **Typical Applications/Services** | **Data Rate (bps)** | **Delay Bound (ms)** | **Packet Loss Rate** |
| Voice | 32 k - 2 M | 30-60 | 10⁻² |
| Video streaming | 1-10 M | Large | 10⁻⁶ |
| Videoconference | 128 k - 6 M | 40-90 | 10⁻³ |
| File transfer | 1-10 M | Large | 10⁻⁸ |
| Web browsing | 1-10 M | Large | 10⁻⁸ |

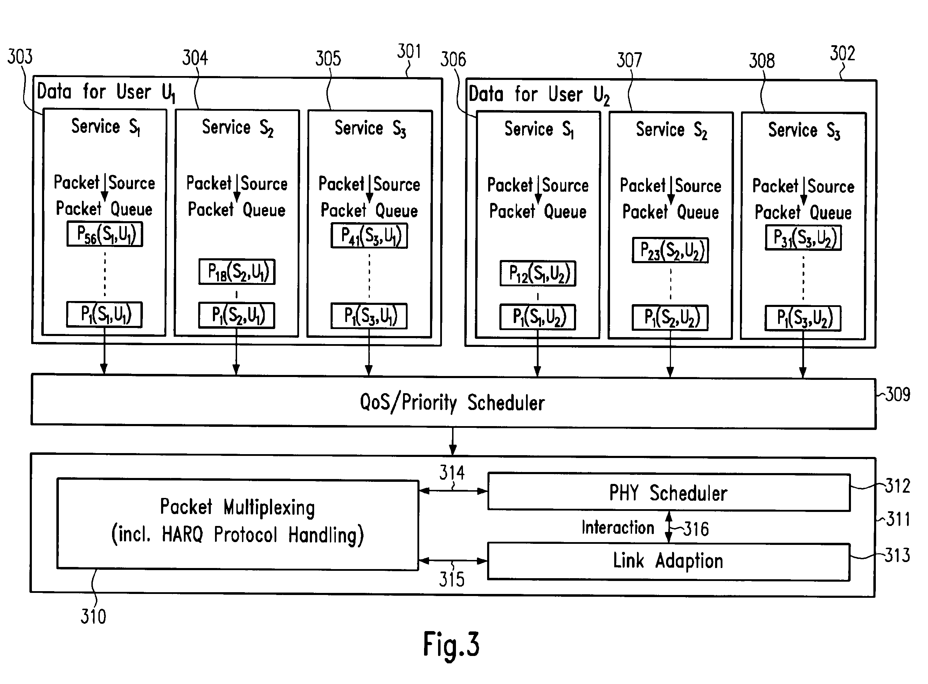

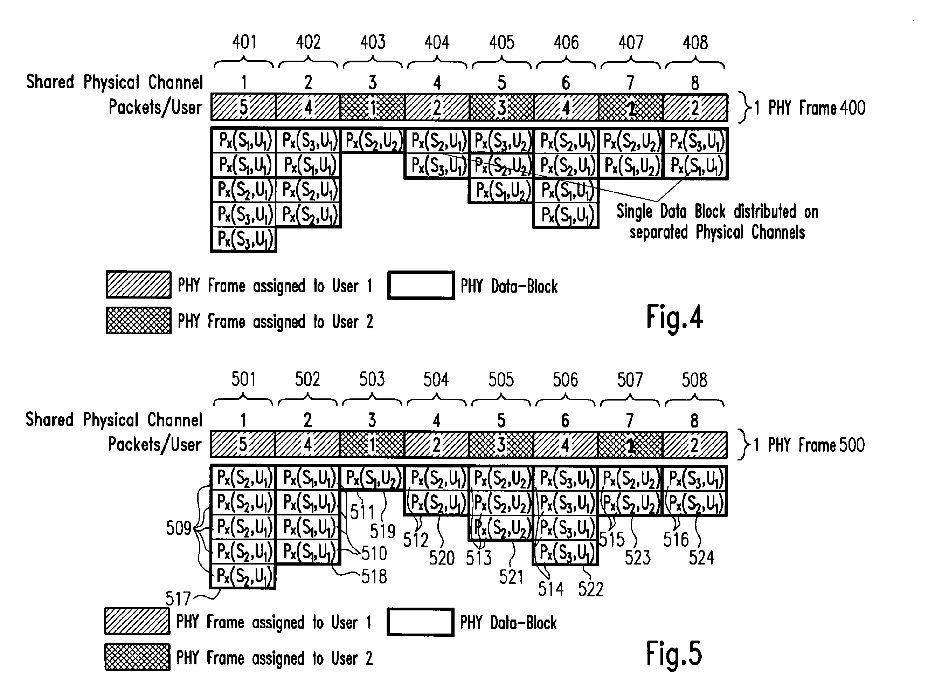

In figure 3 an example of a simplified transmitter architecture is shown, with a focus on the service QoS/priority scheduling and the physical layer units. In this example, two mobile stations share the air interface resources (for example 8 shared Physical Channels as shown in Figure 4), and each of the mobile stations is running three services simultaneously, namely 303-305 running on a first mobile station and 306-308 running on a second mobile station.

The packets from the service packet queues will be treated in the QoS/Priority Scheduler unit 309 in order to account for the QoS and the priorities of the respective packets originating from different services. The interface of the QoS/Priority Scheduler unit 309 to the Packet Multiplexing unit 310 depends on the employed QoS/Priority Scheduler algorithm. This interface might be a single queue holding packets from all users and all services; it might be a single queue per user containing packets from all services per user; it might be one queue per defined priority class, etc.

The sorted packets (in one or multiple queues) are passed to the Packet Multiplexing unit 310, where packets are concatenated or segmented and coded into PHY Data Blocks in order to fit into the resources and data rates assigned by the PHY Scheduler & Link Adaptation unit 311. Each PHY Data Block has own parity data, and in case of uncorrectable errors the whole block has to be re-transmitted. Depending on the architecture, there might also be an entity assigning data blocks to one or multiple configured HARQ processes as e.g. in 3GPP HSDPA (3GPP TSG RAN TR 25.308: "High Speed Downlink Packet Access (HSDPA): Overall Description Stage 2". V5.2.0,http://www.3gpp.org).

Interaction is necessary between the Packet Multiplexing 310 and the PHY Scheduler & Link Adaptation unit 311 in order to fit the size of the multiplexed packets to the allocated resources on the shared Physical Channels for the scheduled users. Moreover, the QoS/Priority Scheduler 309 and the PHY Scheduler 312 may interact in order to align their objectives or they may be even implemented in a single entity. As the smallest time unit for HARQ Protocol Handling and Link Adaptation within one shared PHY channel is one frame, and each frame is assigned to one user only, the interaction indicated with arrows 314-316 is to be understood on a "per user" basis.

As a result of this architecture, the Packet Multiplexing unit 310 may multiplex for each PHY Frame packets from different services running on the same mobile station. The Packet Multiplexing unit 310 will then either generate a single or multiple PHY Data Blocks per mobile station, which will then be mapped on the shared Physical Channels allocated to a specific user.

Figure 4 illustrates the mapping of the packets from services 303-308 in the architecture shown in Figure 3 onto the different shared Physical Channels 401-408 within one frame. In this example the data rate chosen by the MCS selection is exemplified by the number of multiplexed packets per shared Physical Channel shown. PHY channels 401, 402, 404, 406 and 408 carry data for services 303-305 of the first mobile station, channels 403, 405 and 407 carry data for services 306-308 of the second mobile station.

In the following cases it can happen that packets from different services are mapped onto the same PHY Data Block or shared Physical Channel:
- A single PHY Data Block containing packets from different services is mapped onto one shared Physical Channel, e.g. shared Physical Channel 407 in Figure 4
- A single PHY Data Block containing packets from different services is mapped onto multiple shared Physical Channels, e.g. Physical Channels 404+408 in Figure 4
- Multiple PHY Data Blocks with at least one PHY Data Block containing packets from different services are mapped onto a single shared Physical Channel, e.g. shared Physical Channel 405 in Figure 4
- Multiple PHY Data Blocks with at least one PHY Data Block containing packets from different services are mapped across multiple shared Physical Channels, e.g. shared Physical Channels 401+402 in Figure 4

In case of the mapping of multiple PHY Data Blocks across multiple shared Physical Channels (e.g. shared Physical Channels 401+402), figure 4 suggests that a single packet of a PHY Data Block is assigned clearly to a single shared Physical Channel. This will not be the case in most state-of-the-art systems, since channel interleaving is usually employed, which yields a distribution of the packets over all shared Physical Channels on which the PHY Data Block is mapped. The interleaving occurs when the data packets are mapped into one data block and the data block is coded. When the data block is segmented again and mapped onto different channels, each data packet is usually distributed over all block segments and therefore over multiple channels.

One important requirement to a modern communication system is that a user or mobile station can run multiple services at a time having different QoS requirements. In prior art systems the QoS cannot be controlled or influenced on a service basis at the PHY Scheduler & Link Adaptation unit, since packets from different services may be mapped onto the same shared Physical Channel.

It is therefore an object of the present invention to provide individually optimized Quality of Service to each of a plurality of services running on one mobile station.

This object is achieved by a method and a wireless communication system according to the independent claims. Advantageous embodiments are described in the dependent claims.
The method according to the present invention advantageously provides the possibility to adapt the transmission parameters of Physical Channels individually to the required Quality of Service of data transmitted over the channel. A further advantage of the method according to the present invention is that the transmission capacity of the Physical Channel can be economically utilized.

The accompanying drawings are incorporated into and form a part of the specification for explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein
Figure 1 shows an example for DCA with multiplexing four mobile stations on a single shared Physical Channel according to prior art.
Figure 2 illustrates an example for DCA with multiplexing four mobile stations on multiple (N) parallel shared Physical Channels according to prior art.
Figure 3 depicts a simplified general transmitter architecture for mapping service data to eight shared Physical Channels.
Figure 4 shows an exemplary mapping of data blocks onto eight shared Physical Channels within one frame, achieved by the system shown in figure 3.
Figure 5 illustrates one frame within eight shared Physical Channels, each channel containing only packets from one service within this frame. Each PHY channel contains one PHY data block.
Figure 6 illustrates the mapping of service data to eight shared Physical Channels for a single PHY Frame.
Figure 7 depicts an exemplary mapping result with segmented packets.
Figure 8 illustrates a schematic of a system, in which the service specific MCS and HARQ parameter selection is adapted to the actual QoS status of the packets.

The illustrative embodiments of the present invention will be described with reference to the figure drawings wherein like elements and structures are indicated by like reference numbers.

Referring first to figures 3 and 5, a method is shown how data packets 509-516 from services 303-305 running on a first mobile station and services 306-308 running on a second mobile station are mapped to PHY channels 501-508 in a way that allows individual adaptation of transmission parameters of the PHY channels 501-508 to the QoS requirements of services 303-308. Transmission parameters should be understood in this context as physical layer parameters and coding parameters influencing the transmission quality of the PHY Channel, comprising transmission power, MCS selection, forward error correction scheme, HARQ scheme, maximum number of re-transmissions and so on. Within the same PHY frame 500, each PHY Data Block (one per PHY channel) contains data packets from one of the services 303-308 only. For example, PHY Data Block 517 (channel 501) contains only packets 509 belonging to service 304 running on the first mobile station 301 and PHY Data Block 521 (channel 505) contains only packets 513 belonging to service 307 running on the second mobile station 302. This allows the Link Adaptation unit 313 (performing AMC) and the Packet Multiplexing unit 310 (performing HARQ) to adjust their operation per PHY Data Block in order to improve the QoS control for the service packets at the physical layer by adapting the transmission parameters. In case of the solution shown in Figure 5 (one PHY Data Block per shares PHY channel) this means that the transmission parameters are adapted per shared PHY channel.
Contrary to prior art, the method according to the present invention allows the interaction indicated by arrows 314-316 to take place on a "per service" basis.

Although all data packets are drawn with identical size in Figures 4, 5 and 6 as a simplified example, they will generally have variable size, and the method according to the invention is applicable without restriction to packets having variable size.

Although a communication system could in a special case comprise only one shared Physical Channel for data transmission, there might be a plurality of shared Physical Channels available. The method according to the invention could be applied either to all of the shared Physical Channels, to a subset of all channels or even to just one out of the plurality of shared Physical Channels. The remaining shared Physical Channels and dedicated Physical Channels would then be mapped according to prior art.

As mentioned above, the description refers to downlink transmission as illustrative example of the disclosed principle. However, the invention is not limited to downlink transmission, and thus the same principle can be applied to uplink transmission. In this case it is advantageous to perform Link Adaptation 313 in the mobile station in order to e.g. reduce the signalling effort between mobile station and base station.

In a further advantageous embodiment, Link Adaptation 313 comprises a power control functionality. Adapting the transmission power to the QoS requirement of the individual service provides particularly efficient use of the total transmission capacity, especially in the CDMA case, and, in the uplink, particularly economic use of battery capacity, thus leading to longer battery cycles and/or smaller batteries.

In order to be able to map data packets according to the service they belong to, and to be able to set the transmission parameters accordingly, the Packet Multiplexing unit 310 and the Link Adaptation unit 313 need to identify by some means to which service the packets belong. This information is e.g. available by:
- Appropriate separate control signaling (e.g. by handing over relevant information by the QoS/Priority Scheduler 309 to the units 310, 312 and 313 on a separate interface)
- Separate queue handling per service flow
- An indicator field in the packet header

Moreover, in case of a packet-by-packet QoS control, additional information on the individual packets (e.g. time stamp, waiting time, time-to-live) needs to be available, which is usually contained in the packet header. I.e. data packets as communicated in a system according to this invention may be Internet Protocol (IP), Transmission Control Protocol (TCP), User Datagram Protocol (UDP), RTP (Real-Time Protocol) packets or any other (proprietary) protocol, according to which the packets contain relevant information. With this information, the PHY scheduler may advantageously determine the delay status (QoS status) for each packet, e.g. according to a time stamp, waiting time, time-to-live, time left for in-time delivery, etc. Then the Link Adaptation unit may adjust the MCS "aggressiveness" and HARQ parameters, i.e. transmission parameters, not only according to the required QoS, but dynamically also to the actual QoS status of the data packet(s) contained in the PHY data block to be scheduled. For example, if packets belonging to a time critical service like video conference have encountered a rather big delay from their origin (the terminal of the opposite party) up to the scheduler, the MCS selection will be even more conservative and/or the HARQ scheme will be chosen as strong as possible to avoid any re-transmission. If such packets have travelled through the rest of the network rather quickly, a slightly more aggressive MCS selection might be allowable.

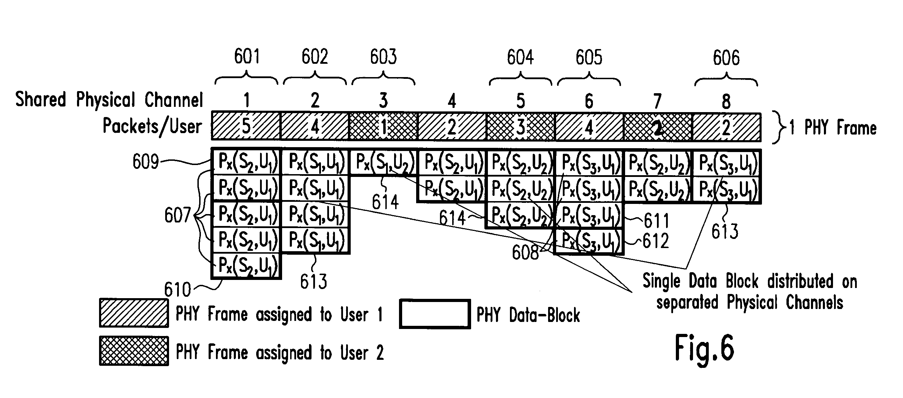

In the example shown figure 5, each channel contains only one data block per frame. For example, channel 501 contains data block 517, channel 502 contains data block 518 and so on. A case where some of the channels contain more than one PHY data block, is illustrated in figure 6. For example, channel 601 contains data blocks 609 and 610 and channel 605 contains data blocks 611 and 612. In this case depending on the system parameters and signalling two solutions are possible/preferable:
- all PHY data blocks mapped onto one PHY channel within one PHY frame must contain data packets from the same service. This is the case when the system is defined such that one set of transmission parameters is defined per shared Physical Channel (for possibly multiple PHY data blocks). As an illustrative example, both data blocks 609 and 610 contain data packets 607 belonging to service 304 running on the first mobile station in figure 3. Equally, both blocks 611 and 612 contain data packets 608 belonging to service 305 running on the first mobile station.
- PHY data blocks mapped onto one PHY channel within one PHY frame may contain data packets from different services, where of course each PHY Data Block must contain only data belonging to one service only. This is the case when the system is defined such that one set of transmission parameters is defined per PHY Data Block, i.e. multiple sets of transmission parameters may be defined per shared Physical Channel.

In all cases shown in figures 5 and 6, a PHY data block must not contain data from more than one service.

On the other hand, one single data block may be distributed on multiple shared PHY channels. In figure 6, data block 613 is distributed between shared PHY channels 602 and 606, and data block 614 is distributed between channels 603 and 604.

Contrary to the requirement to map only data packets belonging to one service to a channel within the same frame, there may or may not be a fixed mapping of a certain service to a shared Physical Channel over multiple PHY Frames.

The time duration of the frames is preferably fixed, but it might also vary from one frame to the next. As the data rate is frequently changed by the MCS, two frames are likely to contain a different amount of data, although having the same time duration.

Referring back to Figure 3, the first mobile station (301) is running three services S₁(303), S₂(304) and S₃(305). As an illustrative example, service 303 may be a file transfer service (e.g. FTP) and service 305 may be a videoconference service. Hence, according to Table 1 the QoS requirements for S₁ (303) would be a strictly low service packet loss rate (e.g. 10⁻⁸) and a relaxed packet delay, usually in the order of several seconds. In contrast, S₃ (305) could tolerate a relatively large packet loss rate, such as 10⁻³, but has a strict delay requirement (e.g. 40-90 ms).

In case of a prior art system (Figure 4), data packets from both services could be mapped onto the same PHY Data Block / shared Physical Channel. For example, channel 401 contains data packets 409 and 410 belonging to service 303 and data packets 412 and 413 belonging to service 305. Since the MCS selection is performed either per PHY Data Block or per shared Physical Channel, the service packet loss rates (residual PHY error-rate) and the packet delays for packets of both services will be correlated and cannot be controlled independently. As HARQ retransmissions are performed on PHY Data Block basis (i.e. always whole PHY Data Blocks are retransmitted), the following problems can occur:
- "Aggressive" MCS selection (at least for the initial transmission) and low number of maximal HARQ retransmissions: The strict packet loss rate requirement for service 303 (file transfer) might not be matched, since the residual PHY error-rate (service packet loss-rate) will be too large.
- "Aggressive" MCS selection (at least for the initial transmission) and high number of maximal HARQ retransmissions: The strict packet loss rate requirement for service 303 (file transfer) might be matched, but the strict delay requirement of service 305 might not be matched. I.e. service packets 412 and 413 from service 305 arrive too late at the receiver and packets are discarded by the application. This leads to inefficient use of air interface resources, since these packets, which have been re-transmitted several times, are useless for the application as they arrive too late.
- "Non Aggressive" MCS selection: The strict packet loss rate requirement for service 303 (file transfer) could be matched, but air interface resources might not be utilized efficiently. An "aggressive" MCS selection usually employs modulation schemes with higher data rates yielding a better air-interface throughput efficiency at the expense of increased delay.

In case of a system according to figure 5, channel 502 (PHY data block 518) carries only data packets 510 belonging to service 303, and channel 506 (PHY data block 522) carries only packets 514 belonging to service 305. Therefore the MCS and HARQ parameter selection for a PHY Channel/data block within one frame can be performed according the QoS requirements of the services, since each channel carries data for one service only within one PHY Frame. An advantageous setting of parameters is the following:
- Delay critical service with strict packet loss requirement: Very "conservative" MCS selection, low/medium number of maximum retransmissions, if possible strong HARQ scheme
- Delay critical service with loose packet loss requirement: "Conservative" MCS selection, low number of maximum retransmissions, weak HARQ scheme is sufficient
- Delay uncritical service with strict packet loss requirement: "Aggressive" MCS selection, high number of maximum retransmissions, if possible strong HARQ scheme
- Delay uncritical service with loose packet loss requirement: Very "aggressive" MCS selection, low number of maximum retransmissions, weak HARQ scheme is sufficient

As explained above, the overall physical layer QoS control depends on the combined operation of the MCS selection and the HARQ parameters/scheme. For the examples above, the channel 502 carrying data packets belonging to service 303 (file transfer) should have an "aggressive" MCS setting and a strong HARQ scheme with a high number of maximum re-transmissions. Channel 506 carrying data packets for service 305 (video conferencing) should have a "conservative" MCS setting and a less strong HARQ scheme with lower number of maximum re-transmissions would be sufficient. In some systems only a single HARQ scheme is available or for configuration reasons only a single HARQ scheme is configured, i.e. the HARQ settings are solely controlled over the maximum number of retransmissions.
The definition of a shared Physical Channel may either vary on a frame-by-frame basis, may be configured on a semi-static basis or may be fixed. E.g. in an OFDMA, OFCDMA or MC-CMDA system a shared Physical Channel may contain one or multiple subcarrier-blocks, which in turn usually contain several subcarriers. The subcarriers, out of which a subcarrier-block is constructed, may be adjacent or distributed over the available bandwidth. In case multiple shared Physical Channels are configured, the shared Physical Channels may contain a varying number of subcarrier-blocks.

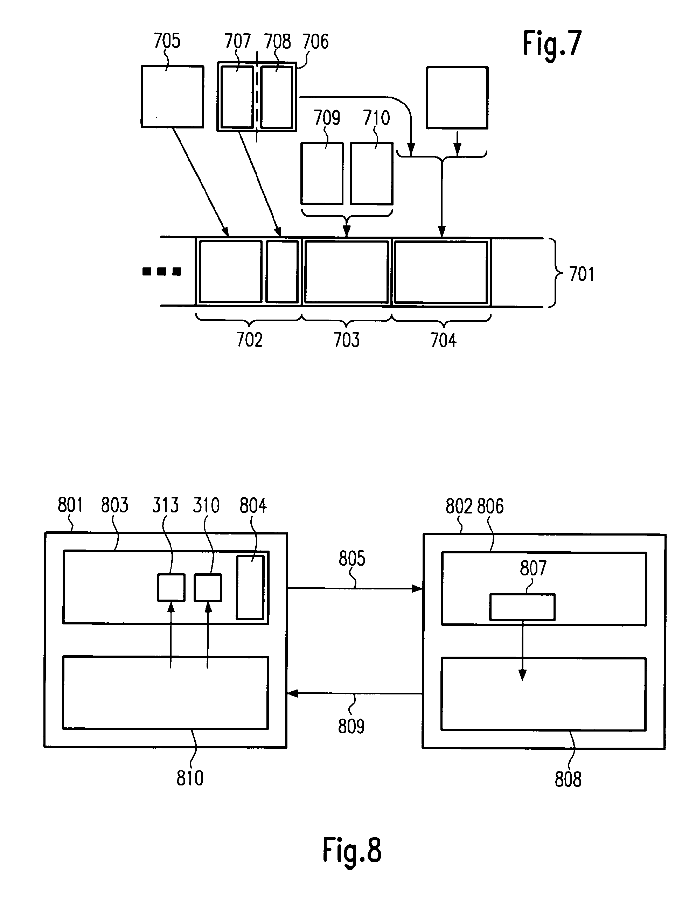

Referring now to figure 7, an advantageous possibility is shown how to avoid loss of transmission capacity caused by a mismatch of packet size and physical frame size. In figure 7 one shared Physical Channel 701 is shown as an illustrative example. 702, 703 and 704 are three frames. Packets 705 and 706 belong to a first service and packets 709 and 710 to a second service. Both services might run on the same mobile station or on different mobile stations. Packet 705 is for example mapped onto frame 702 in channel 701. As it contains less data than can be transmitted (according to the MCS selection) during frame 702, there is some transmission capacity remaining. In order to allow individual adaptation of the transmission parameters of shared Physical Channel 701 during frame 702 to the QoS requirements of the first service, no packets of another service should be mapped into the same frame. However, the next packet 706 is too big for the remaining space in frame 702. The solution shown here is to segment packet 706 into two (or possibly more) smaller segments, here 707 and 708, so that a segment 707 fills the remaining space of frame 702.

In a further advantageous embodiment, the service specific MCS and HARQ parameter selection may not only be adapted to the QoS requirement of the data transmitted, but additionally or solely adapted dynamically to the actual QoS status of the packets or the service multiplexed onto a shared Physical Channel, such as the actual delay status or the monitored current loss rate. A corresponding system is depicted in figure 8. Data transmitter 801 is equipped with a sending system shown in figure 3, particularly comprising a Link Adaptation unit 313 and a Packet Multiplexing unit 310 executing HARQ Protocol Handling. Data transmitter 801 further comprises an RF transmitter with antenna 804. Data is transmitted over a shared Physical Channel of an RF link 805 to a reception unit 806 of a data receiver 802. Reception unit 806 also comprises a QoS monitoring unit 807 monitoring values of QoS parameters like actual packet delay or actual packet loss rate. This information is transmitted over sending system 808, a second RF link 809 and reception unit 810 back to the Link Adaptation unit 313 and HARQ Protocol Handling unit 310 which can react accordingly. For example, when the residual packet loss rate is too high, the maximum number of re-transmissions can be increased, the MCS "aggressiveness" can be reduced or the transmission power increased. When the actual packet delay is higher than allowed by the service for which the data is designated, the Link Adaptation unit might for example select a less aggressive MCS or reduce the maximum number of re-transmissions of the HARQ algorithm.

In a further advantageous embodiment the dynamic adaptation of the transmission parameters can also be performed without monitoring the QoS status at the receiver. Here, simply the transmitter 801 monitors e.g. the delay and packet loss rate statistics by processing the received HARQ ACK/NACK signals received from the data receiver 802.

It is apparent that the data transmitter 801 might be a base station and the data receiver 802 a mobile station or vice versa, depending on downlink or uplink situation. Moreover, both apparatuses may comprise further components not shown in figure 10, like keyboard, display, memory and the like.

## Claims

1. Method for assuring an individual quality of service to each of a plurality of packet switched services (303-308) in a wireless communication system transmitting data packets in time intervals of frames over at least one shared Physical Channel
**characterised in that**
each Physical data block mapped to at least one of said shared Physical Channels (501-508) exclusively contains data belonging to one of said services (303-308).

2. The method according to claim 1, wherein during one of said frames one Physical data block (517) is mapped exclusively to one of said shared Physical Channels (501).

3. The method according to claim 1, wherein during one of said frames one Physical data block (613) is mapped to more than one of said shared Physical Channels (602, 606).

4. The method according to one of the claims 1 to 3, said shared Physical Channel having at least one transmission parameter affecting at least one quality of service aspect of one of said services mapped onto said shared Physical Channel, wherein said at least one transmission parameter is adjusted according to said quality of service aspect.

5. The method according to claim 4, wherein
said at least one quality of service aspect is comprised in a list consisting of a packet loss rate and a packet transmission delay, and
said at least one transmission parameter is comprised in a list consisting of a target physical frame error rate, a maximum number of data re-transmissions, a transmission power, a selected shared Physical Channel data rate, a modulation order on said shared Physical Channel, a coding scheme on said shared Physical Channel, and a scheme for hybrid automatic repeat request.

6. The method according to claim 5, wherein said at least one transmission parameter comprises the target physical frame error rate and said at least one quality of service aspect comprises the packet transmission delay,
said target physical frame error rate being set lower for a service requiring a low transmission delay than for a service allowing a higher transmission delay.

7. The method according to claim 5, wherein said at least one transmission parameter comprises the target physical frame error rate and said at least one quality of service aspect comprises the packet loss rate,
said target physical frame error rate being set lower for a service requiring a low packet loss rate than for a service allowing a higher packet loss rate.

8. The method according to claim 5, wherein said at least one transmission parameter comprises the maximum number of data re-transmissions and said at least one quality of service aspect comprises the packet loss rate,
said maximum number of data re-transmissions being set higher for a service requiring a low packet loss rate than for a service allowing a higher packet loss rate.

9. The method according to claim 5, wherein said at least one transmission parameter comprises the maximum number of data re-transmissions and said at least one quality of service aspect comprises the packet transmission delay,
said maximum number of data re-transmissions being set lower for a service allowing a low packet transmission delay than for a service allowing a higher packet transmission delay.

10. The method according to claim 5, wherein said at least one transmission parameter comprises the scheme for hybrid automatic repeat request and said at least one quality of service aspect comprises the packet loss rate,
a stronger scheme for hybrid automatic repeat request being selected for a service requiring a low packet loss rate than for a service allowing a higher packet loss rate.

11. The method according to claim 5, wherein said at least one transmission parameter comprises the scheme for hybrid automatic repeat request and said at least one quality of service aspect comprises the packet transmission delay,
a stronger scheme for hybrid automatic repeat request being selected for a service requiring a low packet transmission delay than for a service allowing a higher packet transmission delay.

12. Method according to claim 4 or 5, wherein said at least one transmission parameter is adjusted depending on an actual status of said at least one quality of service aspect.

13. The method according to claim 12, wherein said actual status of said quality of service aspect is either an actual packet transmission delay or a monitored packet loss rate.

14. The method according to claim 12, wherein said actual status of said quality of service aspect is a parameter reflecting an actual packet transmission delay from the start of a packet at its origin up to the time of said adjustment of said at least one transmission parameter or a scheduled time of arrival at a destination, said at least one transmission parameter being adjusted on a block by block basis.

15. The method according to claim 12, wherein said actual status of said quality of service aspect is a parameter reflecting the allowed time left until arrival at a destination, said at least one transmission parameter being adjusted on a block by block basis.

16. The method according to claim 12, wherein said actual status of said quality of service aspect is at least one out of delay and packet loss rate statistics obtained by processing "acknowledge" and "not acknowledge" signals received at a data transmitter 801 from a data receiver 802.

17. The method according to one of the preceding claims, wherein each Physical Channel within one Physical Frame contains exclusively data from one Physical data block.

18. The method according to one of the claims 4 to 16, wherein at least one Physical Channel (601) within one Physical Frame contains data from more than one Physical data block (609, 610), and all physical data blocks (609, 610) mapped to the same physical channel (601) within one frame exclusively contain data belonging to one service (304) only.

19. The method according to one of the claims 4 to 16, wherein at least one Physical Channel within one Physical Frame contains data from more than one Physical data block, at least two physical data blocks mapped to the same physical channel within one frame contain data belonging to more than one service, and said at least one transmission parameter is adjusted separately for each physical data block.

20. The method according to one of the preceding claims, wherein each data packet carries information specifying the service to which it belongs.

21. The method according to one of the preceding claims, in which said time intervals of said frames are identical for all frames.

22. The method according to one of the preceding claims, in which data packets have a variable size.

23. The method according to one of the preceding claims, in which data packets are segmented in a multiplexing unit (310) prior to mapping them to frames and channels.

24. The method according to one of the preceding claims, wherein a certain service is mapped to the same Physical Channel for any two different frames.

25. The method according to one of the claims 1 to 23, wherein a certain service is mapped to at least two different Physical Channels within different frames.

26. A wireless communication system comprising at least one base station and at least one mobile station, said wireless communication system being configured to provide packet switched services to a user,
wherein data packets are transmitted in time intervals of frames over at least one shared Physical Channel
**characterised in that**
each Physical data block mapped to at least one of said shared Physical Channels exclusively contains data belonging to one of said services.

27. The wireless communication system according to claim 26, wherein at least one of said packet switched services transmits data packets from said at least one mobile station to said at least one base station, said mobile station being configured to control the mapping of the data packets to said frames and said shared Physical Channels.
